# EUROPÄISCHE PATENTSCHRIFT

(11) **EP 0 940 067 B1**
(45) Veröffentlichungstag und Bekanntmachung des Hinweises auf die Patenterteilung: **31.05.2000**
(21) Anmeldenummer: 97950124.4
(22) Anmeldetag: 06.11.1997
(51) Int. Cl.: H05K 7/18

(54) **SCHALTSCHRANK MIT EINER MONTAGEPLATTE**
SWITCHING CABINET WITH AN ASSEMBLY PLATE
ARMOIRE DE DISTRIBUTION COMPORTANT UNE PLAQUE DE MONTAGE

(30) Priorität: 19.11.1996 DE 19647822; 29.08.1997 DE 19737673
(43) Veröffentlichungstag der Anmeldung: 08.09.1999
(73) Patentinhaber: Rittal-Werk Rudolf Loh GmbH & Co. KG, 35745 Herborn (DE)
(72) Erfinder: REUTER, Wolfgang, D-57299 Burbach 5 (DE); ROOT, Paul, D-35080 Bad Endbach (DE)
(74) Vertreter: Fleck, Hermann-Josef, Dr.-Ing.
(86) Internationale Anmeldenummer: EP9706145
(87) Internationale Veröffentlichungsnummer: WO9823138

(56) Entgegenhaltungen:
- DE-A- 4 140 072
- DE-A- 4 312 487
- DE-C- 19 511 639
- GB-A- 2 160 765
- US-A- 4 689 722

## Beschreibung

Die Erfindung betrifft einen Schaltschrank, der mittels Wandelementen und einer Schranktür verschließbar ist, wobei parallel zu einer vertikalen Seitenwand eine Montageplatte angeordnet ist, die mittels Gleitstücken auf mindestens einer Führungsschiene in Richtung auf die zugeordnete Seitenwand verschiebbar und in eine Montageposition bringbar ist.

Ein solcher Schaltschrank ist beispielsweise aus der DE 41 40 072 A1 bekannt. Derartige Schaltschränke weisen ein Rahmengestell auf, das aus vertikalen und horizontalen Rahmenschenkeln zusammengesetzt ist. Die beiden unteren, in Richtung der Schaltschranktiefe verlaufenden horizontalen Rahmenschenkel sind aus einem mehrfach abgekanteten Blechzuschnitt gebildet. Bei dem so gefertigten offenen Hohlprofil ist ein Steg mit einer Längskante erzeugt, auf der das Gleitstück mit einer schlitzförmigen Aufnahme aufgesetzt ist. Die Montageplatte kann damit an ihren Gleitstücken in Richtung auf die Seitenwand, beispielsweise die der Schranktür gegenüberliegende Rückwand verschoben werden, bis sie ihre Montageposition erreicht.

Die Stege mit den Längskanten werden manchmal als störend empfunden, da sie für gewisse Einbauten die Anbringung an den horizontalen Rahmenschenkeln erschweren. Eine ähnliche Montageplattenbefestigung ist auch aus der DE 43 12 487 bekannt.

Es ist Aufgabe der Erfindung, einen Schaltschrank der eingangs erwähnten Art zu schaffen, bei dem keine Einschränkung der Anbaumöglichkeiten an den Rahmenschenkeln durch die Führungsschienen erfolgt.

Diese Aufgabe der Erfindung wird dadurch gelöst, daß die Führungsschiene als separates Teil ausgebildet und mittels Positioniereinheiten an dem Schaltschrank lösbar befestigt ist, und daß die Führungsschiene nach der Positionierung der Montageplatte aus dem Schaltschrank entnehmbar ist. Die Führungsschienen können also als separates Bauelement gefertigt werden. Sie werden vor der Einbringung der Montageplatte in den Schaltschrank mit den Positioniereinheiten festgelegt. Anschließend kann die Montageplatte eingeschoben und in ihrer Bestimmungsposition festgemacht werden. Die Führungsschienen lassen sich dann wieder einfach aus dem Schaltschrank entnehmen, so daß sie keine Behinderung darstellen.

Vorteilhafterweise sind zwei Führungsschienen im Abstand zueinander im Innenraum des Schaltschrankes festgemacht, um die Montageplatte kippstabil führen zu können. Einsetzbar ist jedoch auch eine einzige oder mehr als zwei Führungsschienen.

Nach einer vorteilhaften Ausgestaltung der Erfindung ist vorgesehen, daß die Positioniereinheiten in Aufnahmen von Rahmenschenkeln eines Rahmengestells festgelegt sind. Hierdurch ist eine ortsfeste und direkte Anbringung am Schaltschrank möglich. Das Rahmengestell weist eine ausreichende Festigkeit auf, um auch bestückte und damit schwere Montageplatten tragen zu können.

Nach einer bevorzugten Ausgestaltungsvariante der Erfindung ist hierbei vorgesehen, daß das Rahmengestell horizontale und vertikale Rahmenschenkel aufweist, wobei die horizontalen Rahmenschenkel einen Boden und einen Deckrahmen bilden, und daß die Aufnahmen für die Positioniereinheiten von Reihen von Befestigungsaufnahmen gebildet sind, die in Längsrichtung der horizontalen Rahmenschenkel eingebracht sind. Damit können die Befestigungsaufnahmen, die normalerweise für die Anbringung von Einbauten verwendet werden, auch für die Führungsschienen eingesetzt werden.

Die Führungsschiene läßt sich dann einfach und mit geringem Kostenaufwand herstellen, wenn vorgesehen ist, daß sie U-profilförmig aus einem Mittelabschnitt und zwei daran angeschlossenen, zueinander parallel beabstandeten Schenkeln gebildet ist, und daß der Mittelabschnitt einen Gleitabschnitt für das Gleitstück hat. Die Führungsschiene wird also so in den Schaltschrank eingesetzt, daß die beiden Stege nach unten weisen. Der Mittelabschnitt bietet dann eine ebene Gleitfläche für das Gleitstück. Durch die beiden Stege entsteht in der Führungsschiene ein hohes Wiederstandsmoment gegen Biegung. Mit dieser einfachen Maßnahmen können auch sehr schwere Montageplatten auf der Führungsschiene verschoben werden.

Ist vorgesehen, daß pro Positioniereinheit zwei Bolzen verwendet sind, die mit einem angefasten Einführstück versehen sind, so ist eine sichere Festlegung der Führungsschiene möglich. Durch die Verwendung von jeweils zwei Bolzen pro Positioniereinheit lassen sich die Freiheitsgrade für die Bewegung der Führungsschiene auf den Versatz lediglich in Richtung der Schaltschrankhöhe beschränken.

Zur Gewährleistung einer einfachen Handhabung ist erfindungsgemäß vorgesehen, daß an die Führungsschiene ein Griff angeschlossen ist, der über die mit der Schranktür verschließbare Frontseite des Schaltschrankes vorsteht, und daß der Gleitabschnitt auf dem Griff fortgesetzt ist. Mit dem Griff kann also die Führungsschiene leicht in den Schaltschrank eingesetzt und wieder aus diesem entnommen werden, wenn die Montage beendet ist. Dadurch, daß sich der Gleitabschnitt auch noch auf dem Griff fortsetzt, kann die Montageplatte schon außerhalb des Schaltschrankes auf die Führungsschiene aufgesetzt werden. Dies erleichtert das Aufsetzen der Montageplatte auf die Führungsschiene erheblich.

Um die Montageplatte sicher auf den Führungsschienen zu führen ist vorgesehen, daß das Gleitstück eine Auflagefläche aufweist, mit der es auf dem Gleitabschnitt der Führungsschienen geführt ist, und daß an dem Gleitstück ein oder mehrere Führungen angebracht sind, die das Gleitstück auf dem Gleitabschnitt halten.

Ein erfindungsgemäßer Schaltschrank ist dadurch gekennzeichnet, daß an das Gleitstück ein Halteelement mit einem Steckansatz angeschlossen ist, der in eine entsprechend ausgestaltete Steckaufnahme der Montageplatte eingeführt ist, und daß das Halteelement an einem mit dem Schaltschrank verbundenen Befestigungsmittel festlegbar ist.

Zur Festlegung der Montageplatte ist vorgesehen, daß an das Gleitstück ein Halteelement mit einem Steckansatz angeschlossen ist, der in eine ausgestaltete Steckaufnahme der Montageplatte eingeführt ist, und daß das Halteelement an einem, mit dem Schaltschrank verbundenen Befestigungsmittel festlegbar ist. Über das Gleitstück läßt sich also die Montageplatte zunächst in Position bringen. Anschließend wird das Halteelement mit dem Befestigungsmittel des Schaltschrankes in Wirkverbindung gebracht. Die Führungsschienen können dann wieder aus dem Innenraum des Schaltschrankes entfernt werden. Dadurch, daß das Halteelement mit einem Steckansatz in eine spezielle Steckaufnahme der Montageplatte eingesetzt ist, wird zum einen eine einfache und schnelle Montage des Gleitstückes erreicht, zum anderen erfolgt eine exakte Ausrichtung der Gleitfläche des Gleitstückes.

Damit die Führungsschienen nach der erfolgten Bestückung des Schaltschrankes mit der Montageplatte wieder einfach abgebaut werden können, ist vorgesehen, daß die Montageplatte an dem Befestigungsmittel im montierten Zustand der Montageplatte im vertikalen Abstand zu der Führungsschiene gehalten ist.

Eine zusätzliche Verwendungsmöglichkeit ergibt sich für die Führungsschiene dann, wenn sie als Transportsicherung an benachbarten vertikalen Rahmenprofilen befestigbar ist. Nach erfolgtem Transport kann die Strebe von den vertikalen Rahmenschenkeln demontiert werden. Sie läßt sich dann dazu verwenden, eine Montageplatte in den Innenraum des Schaltschrankes einzubringen. An der zum Innenraum des Schaltschrankes gerichteten Wand können Einbauten befestigt werden. Insbesondere läßt sich damit die Führungsschiene auch als Montageschiene verwenden.

Nach einer bevorzugten Ausgestaltungsvariante der Erfindung ist vorgesehen, daß die Wand (Gleitabschnitt) mit wenigstens einer Reihe von in gleicher Teilung zueinander beabstandeten Befestigungsaufnahmen versehen ist, an denen elektrische Einbauten befestigbar sind. Neben ihrer Zusatzfunktion als Montagehilfe für die Montageplatte kann eine so ausgestaltete Führungsschiene auch als Montagechassis verwendet werden. Dabei können die elektrischen Einbauten an den vertikalen Rahmenschenkeln angebracht werden.

Mit den Positioniereinheiten kann die Führungsschiene an dem Rahmengestell ausgerichtet und vorpositioniert werden.

Eine mögliche Erfindungsvariante zeichnet sich dadurch aus, daß von der Breitseite des Gleitabschnittes der Führungsschiene zwei Schenkel abgebogen sind, die an ihrem einen Ende in wenigstens einen Fixieransatz auslaufen, und daß der Fixieransatz mit einer Schraubaufnahme versehen ist, über die er an den vertikalen Rahmenschenkel bzw. des horizontalen Rahmenschenkels anschraubbar ist.

Der Überstand der Stützabschnitte über den Gleitabschnitt kann dabei so gewählt werden, daß der Gleitabschnitt in der durch die Profilseiten gebildete Montageebene angeordnet ist. Bei ihrer Verwendung als Geitschiene können die Abkantungen als Anschläge verwendet werden, mit denen sich die Verschiebebewegung der Montageplatte begrenzen läßt. Die Stützabschnitte bieten eine stabile Anbindungsmöglichkeit für die Führungsschiene. Dies ermöglicht die sichere Führung von solchen Montageplatten, die mit schweren Anbauten bestückt sind.

Um eine schnelle und einfache Postitionierung der Führungsschiene zu erreichen, kann insbesondere vorgesehen sein, daß wenigstens einer der Stützabschnitte mit den Positioniereinheiten versehen ist. Wenn die Führungsschiene als Gleitführung für die Montageplatte verwendet wird, dann ist die Festlegung allein an den Positioniereinheiten ausreichend. Eine zusätzliche Befestigung, beispielsweise eine Schraubverbindung, ist nicht erforderlich, da die Querverschiebung der Führungsschiene durch die Positioniereinheiten verhindert ist.

Um eine sichere Befestigung der Führungsschiene zu gewährleisten, kann vorgesehen sein, daß die vertikalen Rahmenschenkel und die horizontalen Rahmenschenkel jeweils wenigstens zwei, dem Innenraum des Rahmengestelles zugewandte, rechtwinklig zueinander stehende erste und zweite Profilseiten aufweisen, wobei die ersten Profilseiten rechtwinklig zur zugeordneten Seite des Rahmengestelles und die zweiten Profilseiten parallel dazu stehen, und daß die Führungsschiene einseitig mit der zweiten Positioniereinheit in die erste Profilseite eingesteckt und mit dem anderen Ende an der zweiten Pofilseite des jeweils zugeordneten vertikalen Rahmenschenkels oder des horizontalen Rahmenschenkels befestigt ist.

Die Erfindung wird im folgenden anhand von in den Zeichnungen dargestellten Ausführungsbeispielen näher erläutert. Es zeigen:
- Fig. 1: in Seitendarstellung ein Rahmengestell eines Schaltschrankes mit einer Montageplatte,
- Fig. 2: den unteren Bereich des Rahmengestelles in vergrößerter Darstellung,
- Fig. 3a bis 3c: eine in den Fig. 1 und 2 gezeigte Führungsschiene in verschiedenen Ansichten,
- Fig. 4: in perspektivischer Teildarstellung eine weitere Ausgestaltungsvariante eines Rahmengestelles mit einer Führungsschiene und
- Fig. 5: zwei vertikale Rahmenschenkel des Rahmengestelles gemäß Fig. 4 mit der daran montierbaren Führungsschiene.

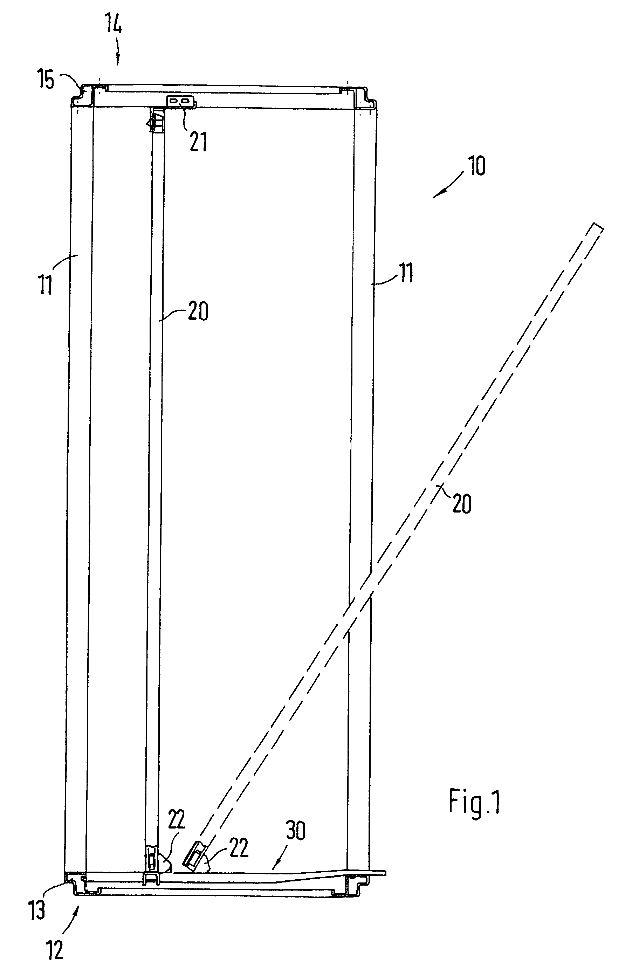

Die Fig. 1 zeigt ein Rahmengestell 10 eines Schaltschrankes. Das Rahmengestell 10 ist aus vertikalen und horizontalen Rahmenschenkeln 11, 13 und 15 zusammengesetzt. Die horizontalen Rahmenschenkel 13, 15 bilden hierbei jeweils einen geschlossenen Boden- bzw. Deckrahmen 12 bzw. 14. In den Innenraum des Schaltschrankes kann eine Montageplatte 20 eingebracht werden. Im vorliegenden Ausführungsbeispiel wird die Montageplatte 20 über die offene Vorderseite des Schaltschrankes in den durch das Rahmengestell 10 gebildeten Innenraum eingeschoben. Die Vorderseite des Schaltschrankes kann mit einer Schranktür verschlossen werden, die aus Gründen der Übersichtlichkeit in der Fig. 1 nicht dargestellt ist. Zum Einbringen der Montageplatte 20 in den Schaltschrank sind Führungsschienen 30 verwendet. Diese sind jeweils in die von der Vorderseite des Schaltschrankes aus gesehenen linken und rechten unteren Seitenbereiche des Bodenrahmens 12 eingebracht. Auf den Führungsschienen 30 können Gleitstücke 22 verstellt werden, die mit der Montageplatte 20 verbunden sind. Im montierten Zustand steht die Motageplatte 20 senkrecht. Das Einschieben der Montageplatte 20 in den Schaltschrank ist schematisch durch die gestrichelte Darstellung der Montageplatte 20 angedeutet. Die vertikale Montageplatte 20 wird mittels einer Halterung 21 oben am Deckrahmen 14 festgemacht.

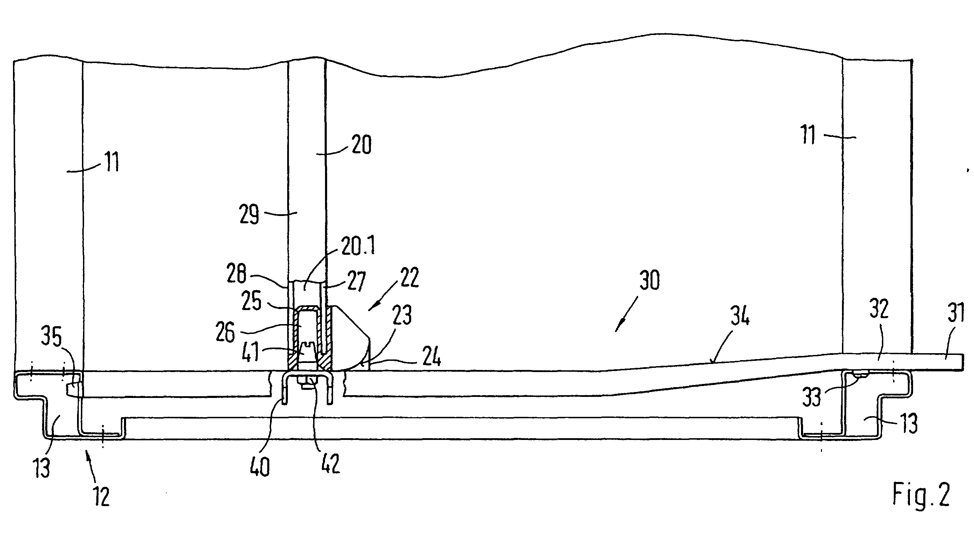

Zur Verdeutlichung der Funktionsweise der Führungsschienen 30 wird im folgenden auf die Fig. 2 bis 3c eingegangen.

Wie aus Fig. 2 ersichtlich ist, weist die Führungsschiene 30 einen Griff 31 auf, der über die offene Vorderseite des Schaltschrankes hervorsteht. An den Griff 31 ist ein Stützabschnitt 32 angeschlossen, der sich auf dem horizontalen Rahmenschenkel 13 abstützt, der in Richtung senkrecht zur Bildebene verläuft. An dem Stützabschnitt 32 ist eine Positioniereinheit 33 angebracht. Die Positioniereinheit besteht aus zwei Bolzen, die in Aufnahmen des horizontalen Rahmenschenkels 13 eingesteckt sind. Die Aufnahmen werden von Reihen von Befestigungsaufnahmen gebildet, die in Längsrichtung der horizontale Rahmenschenkel 13 verlaufen. Die Reihen von Befestigungsaufnahmen sind in die beiden, dem Innenraum des Schaltschrankes zugekehrten Profilseiten eingebracht.

An dem dem Griff 31 abgekehrten Ende der Führungsschiene 30 ist eine zweite Positioniereinheit 35 angeordnet. Diese Positioniereinheit 35 besteht wiederum aus zwei Bolzen. Die Bolzen sind ebenfalls in die von den Reihen von Befestigungsaufnahmen gebildeten Aufnahmen eingeschoben. Mit den Positioniereinheiten 33 und 35 wird die Führungsschiene 30 so festgelegt, daß sie nur noch nach oben an dem Griff 31 abgehoben werden kann. Ein seitlicher Versatz oder eine Verdrehung der Führungsschiene 30 ist ausgeschlossen.

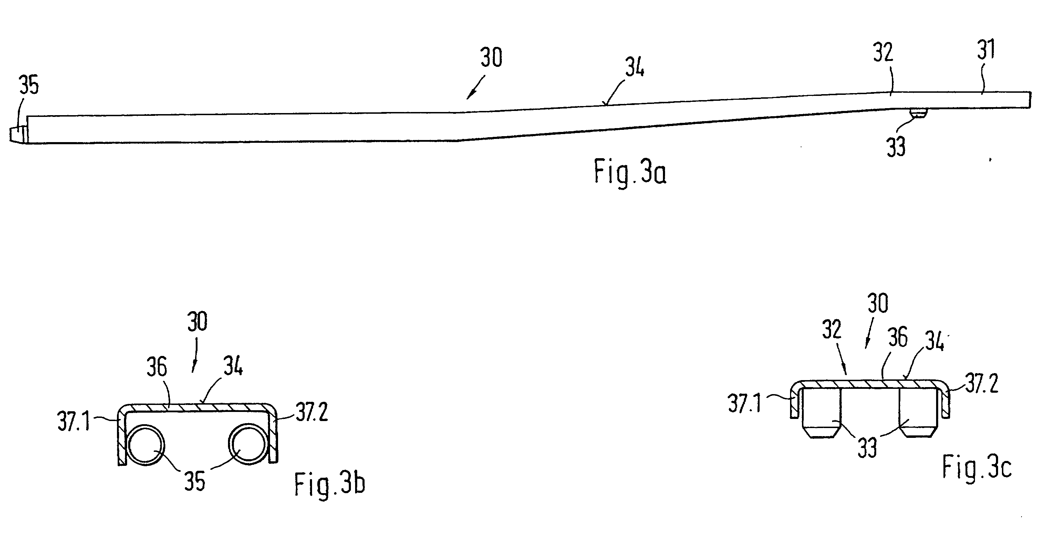

Die Ausgestaltung der Führungsschiene 30 läßt sich im einzelnen näher den Fig. 3a bis 3c entnehmen. Hierbei stellt die Fig. 3a eine Seitenansicht dar, wie sie auch aus den Fig. 1 und 2 entnehmbar ist. Die Fig. 3b zeigt eine Frontansicht auf die linke Seite der Führungsschiene 30. Wie hieraus erkennbar ist, ist die Führungsschiene 30 U-förmig aus einem Mittelabschnitt 36 und zwei sich hieran anschließende, zueinander parallel beabstandete Schenkel 37.1, 37.2 gebildet. An den beiden Schenkel 37.1, 37.2 sind die die Positioniereinheit 35 bildenden Bolzen angelegt und hieran festgemacht.

Die Fig.3c zeigt eine Draufsicht auf die rechte Seite der Führungsschiene 30. Wie hieraus ersichtlich ist, sind die beiden, die Positioniereinheit 33 bildenden Bolzen an der Unterseite des Stützabschnittes 32 festgemacht. Hierzu sind die Bolzen auf dem Mittelabschnitt 36 festgeschweißt.

Wie aus der Fig. 2 weiter ersichtlich ist, ist an das Gleitstück 23 ein Halteelement 22 angeschlossen. Das Halteelement 22 weist einen Steckansatz 25 auf, der in eine entsprechend ausgebildete Steckaufnahme 20.1 der Montageplatte 20 eingeschoben ist. Hierzu weist die Montageplatte 20 eine frontseitige Platte 27 auf, die eine nach hinten abgebogene Abwinklung 29 aufweist. Von der Abwinklung 29 ist rechtwinklig ein Steg 28 parallel zur Platte 27 abgebogen. Zwischen der Platte 27, der Abwinklung 29 und dem Steg 28 ist die Steckaufnahme 20.1 für den Steckansatz 25 gebildet. Der Steckansatz 25 ist hohl ausgebildet, so daß sich eine Aufnahme 26 ergibt. Diese Aufnahme 26 dient zur Festlegung der Montageplatte 20 an dem Rahmengestell 10. In die nur nach unten offene Aufnahme 26 greift ein Befestigungsmittel 41 ein, das vorliegend als angefaster Bolzen ausgebildet ist. Das Befestigungsmittel 41 ist auf einer Querstrebe 40 mittels einer Verschraubung 42 festgemacht. Die Querstrebe 40 verläuft in Richtung der Breite des Schaltschrankes.

Die Ausgestaltung der Führungsschiene 30 läßt sich im einzelnen näher den Fig. 3a bis 3c entnehmen. Hierbei stellt die Fig. 3a eine Seitenansicht dar, wie sie auch aus den Fig. 1 und 2 entnehmbar ist. Die Fig. 3b zeigt eine Frontansicht auf die linke Seite der Führungsschiene 30. Wie hieraus erkennbar ist, ist die Führungsschiene 30 U-förmig aus einem Mittelabschnitt 36 und zwei sich hieran anschließende, zueinander parallel beabstandete Schenkel 37.1, 37.2 gebildet. An den beiden Schenkel 37.1, 37.2 sind die die Positioniereinheit 35 bildenden Bolzen angelegt und hieran festgemacht.

Die Fig.3c zeigt eine Draufsicht auf die rechte Seite der Führungsschiene 30. Wie hieraus ersichtlich ist, sind die beiden, die Positioniereinheit 33 bildenden Bolzen an der Unterseite des Stützabschnittes 32 festgemacht. Hierzu sind die Bolzen auf dem Mittelabschnitt 36 festgeschweißt.

Wie aus der Fig. 2 weiter ersichtlich ist, ist an das Gleitstück 23 ein Halteelement 22 angeschlossen. Das Halteelement 22 weist einen Steckansatz 25 auf, der in eine entsprechend ausgebildete Steckaufnahme 20.1 der Montageplatte 20 eingeschoben ist. Hierzu weist die Montageplatte 20 eine frontseitige Platte 27 auf, die eine nach hinten abgebogene Abwinklung 29 aufweist. Von der Abwinklung 29 ist rechtwinklig ein Steg 28 parallel zur Platte 27 abgebogen. Zwischen der Platte 27, der Abwinklung 29 und dem Steg 28 ist die Steckaufnahme 20.1 für den Steckansatz 25 gebildet. Der Steckansatz 25 ist hohl ausgebildet, so daß sich eine Aufnahme 26 ergibt. Diese Aufnahme 26 dient zur Festlegung der Montageplatte 20 an dem Rahmengestell 10. In die nur nach unten offene Aufnahme 26 greift ein Befestigungsmittel 41 ein, das vorliegend als angefaster Bolzen ausgebildet ist. Das Befestigungsmittel 41 ist auf einer Querstrebe 40 mittels einer Verschraubung 42 festgemacht. Die Querstrebe 40 verläuft in Richtung der Breite des Schaltschrankes.

Zur Einbringung der Montageplatte 20 in den Innenraum des Schaltschrankes wird diese zunächst mit ihrem Gleitstück 23 auf den Griff 31 außerhalb des Schaltschrankes aufgesetzt. Anschließend kann die Montageplatte schräg gestellt werden, was durch die gewölbte Kontur des Gleitstückes 23 ermöglicht wird. Nun läßt sich die Montageplatte durch die offene Frontseite hindurch in den Schaltschrank einschieben. Hierbei gleitet das Gleitstück 23 auf dem Gleitabschnitt 34. Um zu verhindern, daß das Gleitstück 23 seitlich von der Führungsschiene 30 abrutscht, sind Führungen 24 verwendet. Diese sind an das Halteelement 22 angeschlossen.

Wenn die Montageplatte 20 ihre Bestimmungsposition erreicht, so kann sie aufgerichtet werden. Hierbei tritt das Befestigungselement 41 in die Aufnahme 26 ein. Die Querstrebe 40 ist ein kleines Stück höher als die Führungsschiene 30 in den Schaltschrank eingesetzt. Hierdurch ergibt sich bei aufgerichteter Montageplatte 20 ein vertikaler Abstand zwischen dem unteren Ende der Montageplatte und der Führungsschiene 30. Damit kann die Führungsschiene 30 leicht aus dem Innenraum des Schaltschrankes entfernt werden. Sie muß lediglich an dem Griff 31 angehoben werden, so daß die Bolzen der Positioniereinheit 33 aus den Aufnahmen ausgehoben sind. Anschließend kann die Führungsschiene 30 über die offene Frontseite aus dem Schaltschrank herausgezogen werden. Hierbei treten die Bolzen der zweiten Positioniereinheit 35 aus den entsprechenden Aufnahmen aus. Zur abschließenden Fixierung wird die Montageplatte 20 an der Halterung 21, wie sie in der Fig. 1 dargestellt ist, festgemacht.

Die Führungsschiene 30 ist vorliegend zweckmäßigerweise aus einem Stanzbiegeteil gebildet. Um eine gute Gleiteigenschaft zu erreichen, empfiehlt es sich, das Gleitstück 23 aus einem Kunststoff zu fertigen. Das Gleitstück 23 kann zusammen mit dem Halteelement 22 und dem Steckansatz 25 als Kunststoff-Spritzgußteil gefertigt werden.

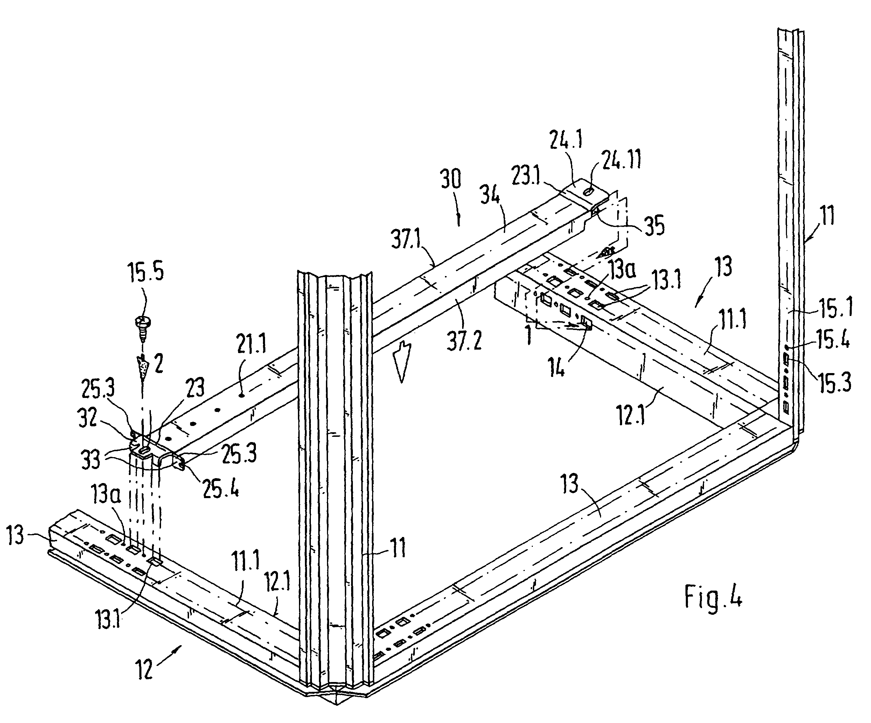

In Fig. 4 ist ein Teil eines Rahmengestelles dargestellt, das aus Rahmenschenkeln zusammengesetzt ist. Dabei sind die horizontalen Rahmenschenkel 13 als Breiten- und Tiefenstreben ausgebildet. Die Breitenstreben und die Tiefenstreben bilden einen Bodenrahmen 12, an dessen Eckbereichen die vertikalen Rahmenschenkel 11 angebunden sind. Die Breitenstreben und die Tiefenstreben sind baugleich ausgebildet. Sie weisen zwei, dem Innenraum des Rahmengestelles zugekehrte Profilseiten 11.1, 12.1 auf. Diese stehen rechtwinklig zueinander. Die erste Profilseite 11.1 steht dabei rechtwinklig zur zugekehrten Seitenwand des Rahmengestelles. Die zweite Profilseite 12.1 verläuft parallel zur Seitenwand. In die Profilseiten 11.1, 12.1 sind Reihen von in gleicher Teilung zueinander beabstandete Befestigungsaufnahmen 13.1, 14 eingebracht. Dabei trägt die erste Profilseite 11.1 zwei Reihen von Befestigungsaufnahmen 13.1, 14. Die zweite Profilseite 12.1 hingegen ist nur mit einer Reihe versehen. Zwischen den einzelnen Befestigungsaufnahmen 13.1, 14 sind Bohrungen 13a in die Profilseiten 11.1, 12.1 eingearbeitet.

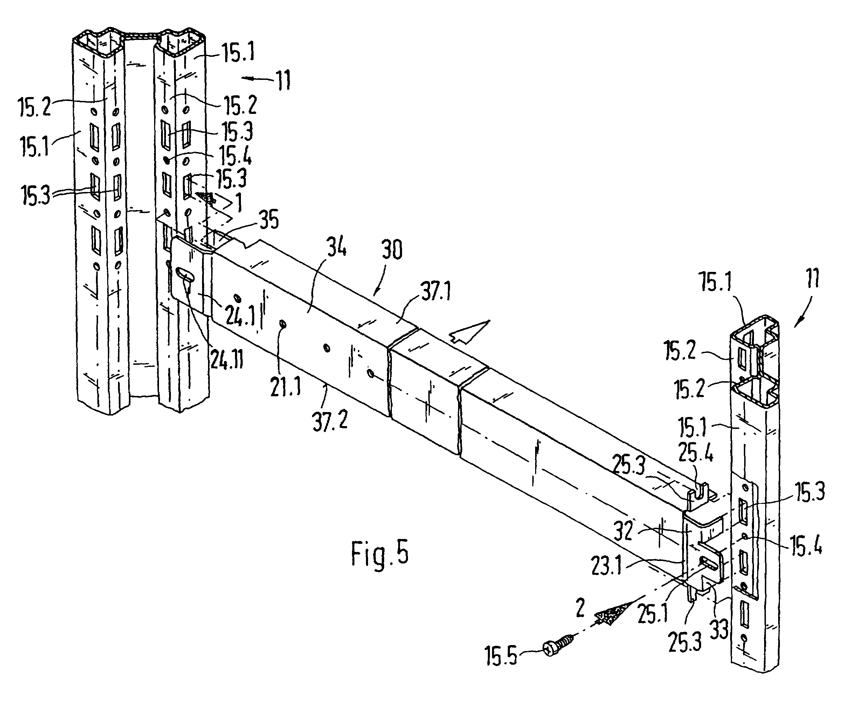

Die vertikalen Rahmenschenkel 11 sind jeweils mit vier Profilseiten 15.1, 15.2 versehen. Die Anordnung der Profilseiten 15.1, 15.2 läßt sich näher der Fig. 5 entnehmen. Wie aus dieser Darstellung erkennbar ist, stehen zwei erste Profilseiten 15.1 jeweils senkrecht zu den zugeordneten Seiten des Rahmengestelles. An diese ersten Profilseiten 15.1 schließen sich rechtwinklig die zweiten Profilseiten 15.2 an. Jede der Profilseiten 15.1, 15.2 ist jeweils mit einer Reihe von Befestigungsaufnahmen 15.3 versehen. Zwischen diesen sind wiederum Bohrungen 15.4 angeordnet.

Unter Bezugnahme auf die Fig. 4 wird im folgenden die Ausgestaltung einer Führungsschiene 30 näher erläutert, die an den gegenüberliegenden Breitenstreben befestigt werden kann. Die Führungsschiene 30 besitzt einen Gleitabschnitt 34, der mit einer Reihe von Befestigungsaufnahmen 21.1 versehen ist. An ihren längsseitigen Enden ist der Gleitabschnitt 34 mit jeweils einer Abkantung 23.1 versehen. Die Abkantung 23.1 verläuft quer zur Längserstreckung der Führungsschiene 30. Die Abkantung 23.1 trägt einen Stützabschnitt. Dabei hält die Abkantung 23.1 den Stützabschnitt 24.1, 32 über der durch den Gleitabschnitt 34 gebildeten Ebene. Die Stützabschnitte 24.1, 32 sind mit jeweils einem Langloch 24.11, 25.1 versehen. Aus dem vorderen Stützabschnitt 32 sind zwei als Steckansätze ausgebildete Positioniereinheiten 33 freigestanzt und rechtwinklig nach unten abgewinkelt.

Von den Breitseiten des Gleitabschnittes 34 der Führungsschiene 30 sind zwei Schenkel 37.1, 37.2 nach unten abgebogen. An ihrem, dem Stützabschnitt 32 zugewandten Ende besitzen die Schenkel 37.1, 37.2 Fixieransätze 25.3. Die Fixieransätze 25.3 sind rechtwinklig von den Seitenschenkeln 22 abgebogen und mit Schraubaufnahmen 25.4 versehen.

An dem dem Stützabschnitt 24.1 zugekehrten Ende ist ein Lappen freigeschnitten und nach innen abgebogen. Dieser Lappen bildet eine Positioniereinheit 35, 24.3.

Die Führungsschiene 30 kann als Montagehilfe für eine Montageplatte verwendet werden. Hierzu wird sie an den parallel zueinanderstehenden Breitenstreben 10.1 befestigt. Zur Befestigung wird die Führungsschiene 30 zunächst mit ihrer Positioniereinheit 35 in eine der Befestigungsaufnahmen 14 der Profilseite 12.1 der hinteren Breitenstrebe eingesteckt (Montageschritt 1). Da die lichte Weite der Befestigungsaufnahme 14 größer ist als die Materialstärke der Positioniereinheit 35, kann dieser vertikal in der Befestigungsaufnahme 14 versetzt werden. Dies erleichtert die Anbringung der Führungsschiene 30 an der Breitenstrebe. Wenn die Positioniereinheit 35 in der Befestigungsaufnahme 14 nach unten geschoben ist, liegt der Stützabschnitt 24.1 auf der ersten Profilseite 11.1 auf. Das Langloch 24.11 in dem Stützabschnitt 24.1 fluchtet dabei mit einer der Bohrungen 13a.

Anschließend läßt sich die Führungsschiene 30 abklappen, wobei die Positioniereinheit 33 in Befestigungsaufnahmen 13.1 der ersten Profilseite 11.1 der vorderen Breitenstrebe eingreifen. Die Abklappbewegung der Führungsschiene 30 wird durch den Stützabschnitt 32 begrenzt, der auf der Profilseite 11.1 aufliegt. Die lichte Öffnungsweite der Befestigungsaufnahme 13.1 quer zur Längserstreckung der Breitenstrebe 10.1 ist größer gewählt als die Materialstärke der Positioniereinheit 33. Damit kann die Führungsschiene 30 begrenzt bezüglich ihrer Längsachse verschoben werden. Infolge dieser Maßnahme ist eine einfache und schnelle Montage möglich. Zudem lassen sich Fertigungstoleranzen ausgleichen. Die so montierte Führungsschiene 30 läßt sich noch mit einem Befestigungselement 15.5 sichern. Das Befestigungselement 15.5 ist als selbstschneidende Schraube ausgebildet, die in das Langloch 25.1 eingeführt und in die Bohrung 13a eingeschraubt ist.

Auf dem Gleitabschnitt 34 kann eine Montageplatte in Richtung der Tiefe des Schaltschrankes verschoben werden. Die Verschiebebewegung läßt sich dabei durch die Abkantungen 23.1 begrenzen.

In ihrer zweiten Funktion kann die Führungsschiene 30 auch als Transportsicherung verwendet werden. Dazu wird sie an zwei benachbarten vertikalen Rahmenprofilen 11 angeschraubt. Diese Einbausituation läßt sich im einzelnen der Fig. 5 entnehmen. Wie aus dieser Darstellung ersichtlich ist, wird die Führungsschiene 30 mit ihren Positioniereinheiten 35 zunächst in zwei benachbarte Befestigungsaufnahmen 15.3 der Profilseite 15.1 des hinteren vertikalen Rahmenprofiles 11 eingesteckt. Anschließend läßt sich der Stützabschnitt 32 auf die Profilseite 15.2 des vorderen vertikalen Rahmenprofiles 11 auflegen. Zur Sicherung der Führungsschiene 30 wird das Befestigungselement 15.5 in die Bohrung 15.4 eingeschraubt. Eine weitere Sicherung der Führungsschiene 30 kann über das Langloch 24.11 des Stützflansches 24.1 erfolgen. Ebenfalls läßt sich auch eine Schraubverbindung zu dem vorderen vertikalen Rahmenprofil 11 über die Schraubaufnahmen 25.4 der Fixieransätze 25.3 herstellen. Eine weitere Funktion der Führungsschiene 30 ergibt sich mit den Befestigungsaufnahmen 21.1, die in den Gleitabschnitt 34 eingebracht sind. Damit kann die Führungsschiene 30 als Montagechassis verwendet werden, an dem elektrische Einbauten angebaut und im Inneren des Rahmengestelles gehalten werden können.

Bei der Verwendung der Führungsschiene 30 als Montagehilfe für die Montageplatte kann deren Ausrichtung so gewählt sein, daß die Montageplatte sich entweder senkrecht zur Rückwand des Rahmengestelles oder parallel dazu verschieben läßt.

## Patentansprüche

1. Schaltschrank, der mittels Wandelementen und einer Schranktür verschließbar ist, wobei parallel zu einer vertikalen Seitenwand eine Montageplatte angeordnet ist, die mittels Gleitstücken auf mindestens einer Führungsschiene in Richtung auf die zugeordnete Seitenwand verschiebbar und in eine Montageposition bringbar ist,
dadurch gekennzeichnet,
daß die Führungsschiene (30) als separates Teil ausgebildet und mittels Positioniereinheiten (33, 35) an dem Schaltschrank lösbar befestigt ist, und
daß die Führungsschiene (30) nach der Positionierung der Montageplatte (20) aus dem Schaltschrank entnehmbar ist.

2. Schaltschrank nach Anspruch 1,
dadurch gekennzeichnet,
daß die Positioniereinheiten (33, 35) in Aufnahmen von Rahmenschenkeln (11, 13) eines Rahmengestelles (10) festlegbar sind.

3. Schaltschrank nach Anspruch 2,
dadurch gekennzeichnet,
daß das Rahmengestell (10) horizontale und vertikale Rahmenschenkel (11, 13, 15) aufweist, wobei die horizontalen Rahmenschenkel (13, 15) einen Boden- und einen Deckrahmen (12 und 14) bilden, und
daß die Aufnahmen für die Positioniereinheiten (33, 35) von Reihen von Befestigungsaufnahmen gebildet sind, die in Längsrichtung der horizontalen Rahmenschenkel (13, 15) eingebracht sind.

4. Schaltschrank nach einem der Ansprüche 1 bis 3,
dadurch gekennzeichnet,
daß die Führungsschiene (30) U-profilförmig aus einem Mittelabschnitt (36) und zwei daran angeschlossenen, zueinander parallel beabstandeten Schenkeln (37.1, 37.2) gebildet ist, und
daß der Mittelabschnitt (36) einen Gleitabschnitt (34) für das Gleitstück (23) hat.

5. Schaltschrank nach einem der Ansprüche 2 bis 4,
dadurch gekennzeichnet,
daß pro Positioniereinheit (33, 35) zwei Bolzen verwendet sind, die mit einem angefasten Einführstück versehen sind.

6. Schaltschrank nach einem der Ansprüche 1 bis 5,
dadurch gekennzeichnet,
daß an die Führungsschiene (30) ein Griff (31) angeschlossen ist, der über die mit der Schranktür verschließbare Frontseite des Schaltschrankes vorsteht, und
daß der Gleitabschnitt (34) auf dem Griff (31) fortgesetzt ist.

7. Schaltschrank nach einem der Ansprüche 1 bis 6,
dadurch gekennzeichnet,
daß das Gleitstück (23) eine Auflagefläche aufweist, mit der es auf dem Gleitabschnitt (34) der Führungsschienen (30) geführt ist, und
daß an dem Gleitstück (23) ein oder mehrere Führungen (24) angebracht sind, die das Gleitstück auf dem Gleitabschnitt halten.

8. Schaltschrank nach einem der Ansprüche 1 bis 7,
dadurch gekennzeichnet,
daß an das Gleitstück (23) ein Halteelement (22) mit einem Steckansatz (25) angeschlossen ist, der in eine entsprechend ausgestaltete Steckaufnahme (20.1) der Montageplatte (20) eingeführt ist, und
daß das Halteelement (22) an einem mit dem Schaltschrank verbundenen Befestigungsmittel (41) festlegbar ist.

9. Schaltschrank nach Anspruch 8,
dadurch gekennzeichnet,
daß die Montageplatte (20) an dem Befestigungsmittel (41) im montierten Zustand der Montageplatte (20) im vertikalen Abstand zu der Führungsschiene (30) gehalten ist.

10. Schaltschrank nach einem der Ansprüche 1 bis 9,
dadurch gekennzeichnet,
daß die Führungsschiene (30) an Befestigungsaufnahmen (15.3) benachbarter vertikaler Rahmenschenkel (11) als Transportsicherung befestigbar ist, und
daß die Führungsschiene (30) eine dem Innenraum des Schaltschrankes zugewandte Wand (Gleitabschnitt 34) aufweist.

11. Schaltschrank nach einem der Ansprüche 1 bis 10,
dadurch gekennzeichnet,
daß die Wand (Gleitabschnitt 34) mit wenigstens einer Reihe von in gleicher Teilung zueinander beabstandeter Befestigungsaufnahmen (21.1) versehen ist, an denen elektrische Einbauten befestigbar sind.

12. Schaltschrank nach einem der Ansprüche 1 bis 11,
dadurch gekennzeichnet,
daß von der Breitseite des Gleitabschnittes (34) der Führungsschiene (30) zwei Schenkel (37.1, 37.2) abgebogen sind, die an ihrem einen Ende in wenigstens einem Fixieransatz (25.3) auslaufen, und
daß der Fixieransatz (25.3) mit einer Schraubaufnahme (25.4) versehen ist, über die er an den vertikalen Rahmenschenkel (11) bzw. des horizontalen Rahmenschenkels (13) anschraubbar ist.

13. Schaltschrank nach einem der Ansprüche 1 bis 12,
dadurch gekennzeichnet,
daß der Gleitabschnitt (34) an seinen längsseitigen Enden mit Abkantungen (23.1) versehen ist, die sich quer zur Längsrichtung der Führungsschiene (30) erstrecken und über die durch den Gleitabschnitt (34) gebildete Ebene vorstehen, und
daß sich an die Abkantungen (23.1) Stützabschnitte (32) anschließen, die an Profilseiten (15.1, 15.2) der zugeordneten vertikalen Rahmenschenkel (11) bzw. der zugeordneten horizontalen Rahmenschenkel anliegen.

14. Schaltschrank nach Anspruch 13,
dadurch gekennzeichnet,
daß wenigstens einer der Stützabschnitte (32) mit den Positioniereinheiten (33, 35) versehen ist.

15. Schaltschrank nach einem der Ansprüche 1 bis 14,
dadurch gekennzeichnet,
daß die vertikalen Rahmenschenkel (11) und die horizontalen Rahmenschenkel (13) jeweils wenigstens zwei, dem Innenraum des Rahmengestelles zugewandte, rechtwinklig zueinander stehenden erste und zweite Profilseiten (15.1, 15.2 und 11.1, 12.1) aufweisen, wobei die ersten Profilseiten (15.1, 11.1) rechtwinklig zur zugeordneten Seite des Rahmengestelles und die zweiten Profilseiten (15.2, 12.2) parallel dazu stehen, und
daß die Führungsschiene (30) einseitig mit der zweiten Positioniereinheit (35) in die erste Profilseite (15.1, 11.1) eingesteckt und mit dem anderen Ende an der zweiten Profilseite (15.2, 12.1) des jeweils zugeordneten vertikalen Rahmenschenkels (11) oder des horizontalen Rahmenschenkels (13) befestigt ist.

## Claims

1. Switchgear cabinet, which is closable by means of wall elements and a cabinet door, a mounting plate being disposed parallel to a vertical lateral wall, said plate being displaceable by means of slidable parts on at least one guide rail in the direction of the associated lateral wall and being able to be brought into a mounting position, characterised in that the guide rail (30) is configured as a separate part and is detachably mounted on the switchgear cabinet by means of positioning units (33, 35), and in that the guide rail (30) is removable from the switchgear cabinet once the mounting plate (20) has been positioned.

2. Switchgear cabinet according to claim 1, characterised in that the positioning units (33, 35) are securable in receiving means of frame members (11, 13) of a framework (10).

3. Switchgear cabinet according to claim 2, characterised in that the framework (10) includes horizontal and vertical frame members (11, 13, 15), the horizontal frame members (13, 15) forming a bottom frame (12) and a top frame (14), and in that the receiving means for the positioning units (33, 35) are formed by rows of mounting recesses, which are provided in the longitudinal direction of the horizontal frame members (13, 15).

4. Switchgear cabinet according to one of claims 1 to 3, characterised in that the guide rail (30) has a U-shaped profile and is formed from a central portion (36) and two members (37.1, 37.2), which communicate with said central portion and lie parallel to each other with a spacing therebetween, and in that the central portion (36) has a sliding portion (34) for the slidable part (23).

5. Switchgear cabinet according to one of claims 2 to 4, characterised in that two pins per positioning unit (33, 35) are used, which are provided with a chamfered insert piece.

6. Switchgear cabinet according to one of claims 1 to 5, characterised in that a handle (31) communicates with the guide rail (30) and protrudes beyond the front side of the switchgear cabinet which is closable with the cabinet door, and in that the sliding portion (34) extends to the handle (31).

7. Switchgear cabinet according to one of claims 1 to 6, characterised in that the slidable part (23) includes a bearing surface, by means of which it is guided on the sliding portion (34) of the guide rails (30), and in that one or more guides (24) are provided on the slidable part (23) and retain the slidable part on the sliding portion.

8. Switchgear cabinet according to one of claims 1 to 7, characterised in that a retaining element (22) communicates with the slidable part (23) and has an insertable projection (25) which is introduced into a correspondingly configured plug-in receiver (20.1) of the mounting plate (20), and in that the retaining element (22) is securable on a securing means (41) connected to the switchgear cabinet.

9. Switchgear cabinet according to claim 8, characterised in that, when the mounting plate (20) is in its mounted position, the mounting plate (20) on the securing means (41) is kept vertically spaced from the guide rail (30).

10. Switchgear cabinet according to one of claims 1 to 9, characterised in that the guide rail (30) is securable in mounting recesses (15.3) of adjacent vertical frame members (11) to prevent movement, and in that the guide rail (30) includes a wall (sliding portion 34) facing the interior of the switchgear cabinet.

11. Switchgear cabinet according to one of claims 1 to 10, characterised in that the wall (sliding portion 34) is provided with at least one row of mounting recesses (21.1), which are spaced at identical distances from one another, and in which electrical components are mountable.

12. Switchgear cabinet according to one of claims 1 to 11, characterised in that two members (37.1, 37.2) are bent from the wide side of the sliding portion (34) of the guide rail (30) and terminate at one of their ends in at least one fixing projection (25.3), and in that the fixing projection (25.3) is provided with a screw receiver (25.4), via which said projection is screw-connectable to the vertical frame member (11) or respectively the horizontal frame member (13).

13. Switchgear cabinet according to one of claims 1 to 12, characterised in that the sliding portion (34) is provided at the ends of its longitudinal sides with bent-over portions (23.1), which extend transversely relative to the longitudinal direction of the guide rail (30) and protrude beyond the plane formed by the sliding portion (34), and in that supporting portions (32) communicate with the bent-over portions (23.1) and abut against profile sides (15.1, 15.2) of the associated vertical frame members (11) or respectively of the associated horizontal frame members.

14. Switchgear cabinet according to claim 13, characterised in that at least one of the supporting portions (32) is provided with the positioning units (33, 35).

15. Switchgear cabinet according to one of claims 1 to 14, characterised in that the vertical frame members (11) and the horizontal frame members (13) each include at least two first and second profile sides (15.1, 15.2 and 11.1, 12.1), which face the interior of the framework and extend at right angles to each other, the first profile sides (15.1, 11.1) extending at right angles to the associated side of the framework, and the second profile sides (15.2, 12.1) extending parallel thereto, and in that the guide rail (30) is inserted into the first profile side (15.1, 11.1) with its one end provided with the second positioning unit (35) and is mounted with the other end on the second profile side (15.2, 12.1) of the respectively associated vertical frame member (11) or of the horizontal frame member (13).

## Revendications

1. Armoire de distribution qui peut être fermée au moyen d'éléments de paroi et d'une porte d'armoire, où est disposée, parallèlement à une paroi verticale, une plaque de montage qui peut être glissée au moyen de pièces de glissement sur au moins un rail de guidage en direction de la paroi correspondante et qui peut être mise dans une position de montage,
caractérisée
en ce que le rail de guidage (30) est conçu comme une pièce distincte fixée de manière amovible au moyen d'unités de positionnement (33, 35) à l'armoire de distribution et
en ce que le rail de guidage (30) peut être retiré de l'armoire de distribution après mise en place de la plaque de montage (20) .

2. Armoire de distribution suivant la revendication 1,
caractérisée
en ce que les unités de positionnement (33, 35) peuvent être calées dans des logements de montants (11, 13) d'une ossature (10).

3. Armoire de distribution suivant la revendication 2,
caractérisée
en ce que l'ossature (10) présente des montants d'ossature horizontaux et verticaux (11, 13, 15), les montants d'ossature horizontaux (13, 15) formant un cadre de socle et les montants d'ossature (12 et 14) un cadre de couverture, et
en ce que les logements pour les unités de positionnement (33, 35) sont constitués par des rangées de logements de fixation qui sont pratiqués dans les montants d'ossature horizontaux (13, 15) en direction longitudinale de ceux-ci.

4. Armoire de distribution suivant l'une quelconque des revendications 1 à 3,
caractérisée
en ce que le rail de guidage (30) est formé par un profilé en U constitué d'un tronçon médian (36) auquel se raccordent deux ailes (37.1, 37.2) disposées parallèlement à une certaine distance l'une de l'autre, et
en ce que le tronçon médian (36) présente un tronçon de glissement (34) pour la pièce de glissement (23).

5. Armoire de distribution suivant l'une quelconque des revendications 2 à 4,
caractérisée
en ce que, par unité de positionnement (33, 35), sont utilisés deux boulons qui sont pourvus d'une pièce d'insertion biseautée.

6. Armoire de distribution suivant l'une quelconque des revendications 1 à 5,
caractérisée
en ce qu'au rail de guidage (30) est raccordée une poignée (31) dépassant de la face qui peut être fermée par la porte de l'armoire de distribution, et
en ce que le tronçon de glissement (34) se prolonge sur la poignée (31).

7. Armoire de distribution suivant l'une quelconque des revendications 1 à 6,
caractérisée
en ce que la pièce de glissement (23) présente une surface d'appui au moyen de laquelle elle est guidée sur le tronçon de glissement (34) des rails de guidage (30), et
en ce que sur la pièce de guidage (23) sont disposés un ou plusieurs guides (24) qui maintiennent la pièce de guidage sur le tronçon de guidage.

8. Armoire de distribution suivant l'une quelconque des revendications 1 à 7,
caractérisée
en ce que, sur la pièce de glissement (23), est raccordé un élément de maintien (22) comportant un embout d'enfichage (25) qui est introduit dans un logement d'enfichage (20.1) correspondant de la plaque de montage (20), et
en ce que l'élément de maintien (22) peut être fixé sur un dispositif de maintien (41) relié à l'armoire de distribution.

9. Armoire de distribution suivant la revendication 8, caractérisé
en ce que la plaque de montage (20), une fois en place, est maintenue sur le dispositif de maintien (41) à une certaine distance verticale du rail de montage (30).

10. Armoire de distribution suivant l'une quelconque des revendications 1 à 9,
caractérisée
en ce que le rail de guidage (30) peut être fixé dans des logements de fixation (15.3) de montants d'ossature verticaux (11) contigus dans le but d'en assurer la sécurité lors du transport, et
en ce que le rail de guidage (30) présente une paroi (tronçon de glissement 34) orientée vers l'intérieur de l'armoire de distribution.

11. Armoire de distribution suivant l'une quelconque des revendications 1 à 10,
caractérisée
en ce que la paroi (tronçon de glissement 34) est pourvue d'au moins une rangée de logements de fixation (21.1) disposés à égale distance les uns des autres, et dans lesquels peuvent être fixés des modules électriques.

12. Armoire de distribution suivant l'une quelconque des revendications 1 à 11,
caractérisée
en ce que le tronçon de glissement (34) du rail de guidage (30) est coudé sur sa largeur de manière à former deux ailes (37.1, 37.2) qui se terminent à l'une de leurs extrémités par au moins un embout de fixation (25.3), et
en ce que l'embout de fixation (25.3) est pourvu d'un logement fileté (25.4) à l'aide duquel il peut être fixé par vissage sur le montant d'ossature vertical (11) ou le montant d'ossature horizontal (13).

13. Armoire de distribution suivant l'une quelconque des revendications 1 à 12,
caractérisée
en ce que le tronçon de glissement (34) présente à chacune de ses extrémités des parties coudées (23.1) qui s'étendent perpendiculairement par rapport à la direction longitudinale du rail de guidage (30) et dépassent du plan formé par le tronçon de gissement (34), et
en ce qu'aux parties coudées (23.1) se racordent des tronçons d'appui (32) qui s'appliquent sur des faces des profilés (15.1, 15.2) faisant partie des montants d'ossature verticaux (11) correspondants, ou des montants d'ossature horizontaux.

14. Armoire de distribution suivant la revendication 13,
caractérisée
en ce qu'un des tronçons d'appui, au moins, est pourvu des unités de positionnement (33, 35).

15. Armoire de distribution suivant l'une quelconque des revendications 1 à 14,
caractérisée
en ce que les montants d'ossature verticaux (11) et les montants d'ossature horizontaux (13) présentent chacun au moins deux premières et deux deuxièmes faces de profilé (15.1, 15.2 et 11.1, 12.1) orientées vers l'intérieur de l'ossature et disposées orthogonalement, les premières faces de profilé (15.1, 15.2) étant perpendiculaires à la face correspondante de l'ossature et les deuxièmes faces de profilé (11.1, 12.1) lui étant parallèles, et
en ce que le rail de guidage (30) est, à l'une de ses extrémités, enfiché par la deuxième unité de positionnement (35) dans la première face de profilé (15.1, 15.2), et, par son autre extrémité, fixé à la deuxième face de profilé (15.2, 12.1) du montant d'ossature vertical (11) ou horizontal (13) correspondant.
